# EUROPEAN PATENT APPLICATION

(11) **EP 1 745 942 A2**
(43) Date of publication of application: **24.01.2007**
(21) Application number: 06253724.6
(22) Date of filing: 17.07.2006
(51) Int. Cl.: B44C 1/17, B44C 5/00, B44C 5/06, B41M 5/035

(54) **Transfer printing method on a non-planar surface of an object**

(30) Priority: 18.07.2005 CN 200510027809
(71) Applicant: Zhao, Dong Lin, Meilin Futian District, Shenzhen (CN); Zhang, Rong Liang, Shanghai (CN)
(72) Inventor: Zhao, Dong Lin, Meilin Futian District, Shenzhen (CN); Zhang, Rong Liang, Shanghai (CN)
(74) Representative: Jenkins, Richard Gavin

(57) **Abstract**

A transfer printing method for printing a pattern on a non-planar surface of an object (7), comprises the steps of:
(a) providing a transfer printing sheet (S) comprising a base layer (1) and a printing layer (3) incorporating the pattern;
(b) shaping the transfer printing sheet (S) to the same shape as the non-planar surface of the object (7);
(c) placing the shaped transfer printing sheet (S) inside a mould (29/30) for producing the object (7) through a moulding operation, with the printing layer (3) facing inwards;
(d) introducing a moulding material into the mould (29/30) to produce the object (7) and to transfer the printing layer (3) to the non-planar surface of the object (7) and integrate the printing layer (3) with the non-planar surface as the object (7) is moulded into shape; and
(e) removing the base layer (1) to reveal the pattern printed on the surface of the object (7).

## Description

The present invention relates to a transfer printing method for printing on a non-planar surface and in particular, but not exclusively, an irregular surface, such as the surface of a ball, a human figurine and so on.

### BACKGROUND OF THE INVENTION

It is a longstanding problem to print a fine pattern on an irregular surface of an object. A conventional method of printing a fine pattern on an irregular surface employs a pad printing. In recent years, many transfer printing methods have been developed for use in this field.

US Patent No. 6,110,316 discloses a method in which solid particles are caused to collide with a composite printing sheet from the back surface thereof so that the composite printing sheet has a shape identical with that of the irregular surface of a printing-pattern-receiving base, then a printing layer is transferred to the irregular surface of the printing-pattern-receiving base by heating the printing-pattern-receiving base.

The technique disclosed in Japanese Patent Laid-Open Publication No. 5-139097 is a surface-decorating method employing a transfer printing method, in which a thermoplastic resin film is used as the base of a transfer printing sheet. The transfer printing method comprises placing, on a base having a convexly curved surface, a transfer printing sheet prepared by successively moulding a release layer, a pattern layer and an adhesive layer on the base, and applying pressure to the transfer printing sheet by a heated roll made of rubber having a rubber hardness of 60° or less from the back surface of the base to transfer the pattern to the base, thereby obtaining a decorative laminate.

However, the prior art printing methods have problems or shortcomings. Firstly, the transfer film of the plastic sheet cannot be deformed to a large extent, so that it is not suitable for some complicated irregular surfaces deformed to a large extent. Secondly, the standard position-aligning deformation cannot be performed, so that the pattern tends to be misaligned and are not sufficiently fine. Thirdly, the heat or bonding force generated during moulding of the object to be printed is not used to accomplish the transfer.

The invention seeks to obviate or at least alleviate such problems or shortcomings by providing a new or otherwise improved transfer printing method.

### SUMMARY OF THE INVENTION

According to the invention, there is provided a transfer printing method for printing a pattern on a non-planar surface of an object, comprising the steps of:
(a) providing a transfer printing sheet comprising a base layer and a printing layer incorporating the pattern;
(b) shaping the transfer printing sheet to substantially the same shape as the non-planar surface of the object;
(c) placing the shaped transfer printing sheet inside a mould for producing the object through a moulding operation, with the printing layer facing inwards;
(d) introducing a moulding material into the mould to produce the object and to transfer the printing layer to the non-planar surface of the object and integrate the printing layer with the non-planar surface as the object is moulded into shape; and
(e) removing the base layer to reveal the pattern printed on the surface of the object.

Preferably, in step (d) the printing layer is transferred to and integrated with the non-planar surface of the object under the action of at least one of heat and reaction activity during the moulding operation.

Preferably, step (d) includes using physical changes and chemical changes taking place during the moulding operation to bond the printing layer with the non-planar surface of the object.

Preferably, step (b) comprises shaping the transfer printing sheet to substantially the same shape as the non-planar surface of the object through a vacuum moulding operation.

More preferably, step (b) includes producing a mould having substantially the same shape as the non-planar surface of the object for use in the vacuum moulding operation for shaping the transfer printing sheet to that shape.

It is preferred that step (c) includes placing the shaped transfer printing sheet to cover substantially the entire inner surface of the mould.

It is preferred that the base layer is made of a plastic material.

It is preferred that the base layer is made of a material selected from polyethylene terephthalate (PET), polycarbonate (PC) and polyvinyl chloride (PVC).

It is preferred that the transfer printing sheet includes a separation layer between the base layer and the printing layer.

It is further preferred that the separation layer comprises one of silicone oil and wax.

Preferably, the transfer printing sheet has an elongation rate exceeding 200%.

Preferably, the moulding material of step (d) is selected from rigid thermoset plastics, semi-rigid thermoplastic elastomer, soft foaming material and soft elastic material.

The invention also provides an object printed with a pattern using the aforesaid transfer printing method, comprising a body which has a non-planar surface on which the pattern is so printed.

### BRIEF DESCRIPTION OF DRAWINGS

The invention will now be more particularly described, by way of example only, with reference to the accompanying drawings, in which:
Figure 1A is a cross-sectional side view of a transfer printing sheet used in an embodiment of transfer printing method in accordance with the invention;
Figure 1B is a cross-sectional side view similar to Figure 1A, showing another transfer printing sheet that may be used instead;
Figure 2 is a schematic cross-sectional side view of an object to be printed using the subject transfer printing method;
Figure 3 is a schematic cross-sectional side view of a pair of moulds having respective surfaces the same as the upper and lower surface of the object of Figure 2;
Figure 4 is a schematic side view of a vacuum moulding machine for shaping two transfer printing sheets of Figure 1A or 1B using the moulds of Figure 3;
Figure 5 is a schematic side view showing the two shaped transfer printing sheets;
Figure 6 is a schematic cross-sectional side view of a pair of moulds for producing the object of Figure 2; and
Figure 7 is a schematic cross-sectional side view similar to Figure 6, showing the use of the shaped transfer printing sheets of Figure 5 in the moulds of Figure 6.

### DETAILED DESCRIPTION OF PREFERRED EMBODIMENT

Referring to the drawings, there is illustrated a transfer printing method embodying the invention for printing a pattern on a non-planar surface 5/6 of an object 7, which in general comprises the steps of:
- providing a transfer printing sheet S having a base layer 1 and a printing layer 3 incorporating the pattern;
- shaping the transfer printing sheet S to substantially the same shape as the non-planar surface 5/6 of the object 7;
- placing the shaped transfer printing sheet S inside a mould 29/30 for producing the object 7 through a moulding operation, with the printing layer 3 facing inwards;
- introducing a moulding material into the mould 29/30 to produce the object 7 and to transfer the printing layer 3 to the non-planar surface 5/6 of the object 7 and integrate the printing layer 3 with the non-planar surface 5/6 as the object 7 is moulded into shape; and
- removing the base layer 1 to reveal the pattern printed on the surface of the object 7.

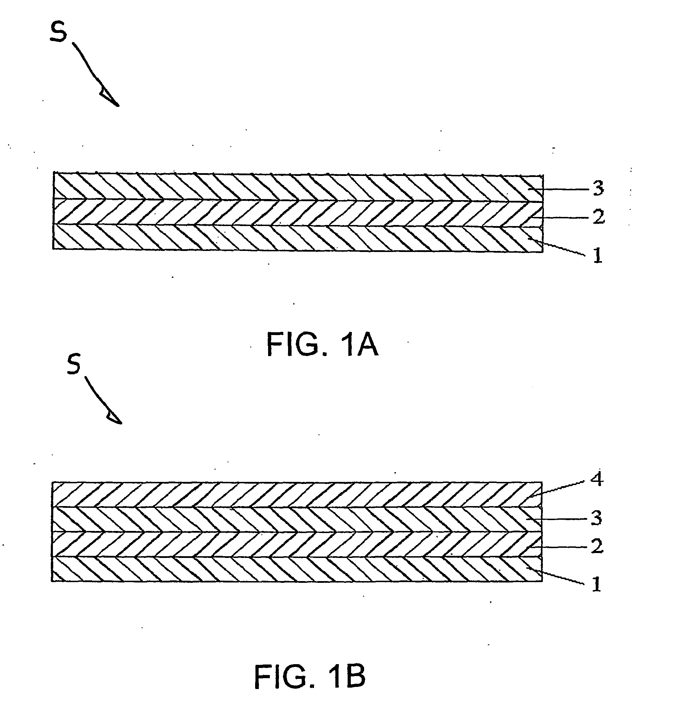

The transfer printing sheet S is initially a flat film which has either a three-layer or four-layer composite structure as shown in Figure 1A or 1B. Apart from the base layer 1 and printing layer 3, the transfer printing sheet S includes a separation layer 2 between the base and printing layers 1 and 3, which is coated over the surface of the base layer 1. The printing layer 3 incorporates a fine pattern that is printed on the separation layer 2 through an offset or gravure printing method, at a resolution reaching 2001pi (lines per inch).

The pattern is suitably pre-adjusted in order to assume the originally intended design after it has been transfer printed onto the non-planar surface 5/6 of the object 7. This caters for the anticipated transformation from an initially flat shape to the final non-planar shape on the surface 5/6 of the object 7 before and after the subject transfer printing operation is performed. Thus, the pattern is kept in strict correspondence with the surface 5/6 of the object 7 to be printed.

According to the properties of the material of the object 7 to be printed, it is determined whether a heat-melting plastic adhesive layer 4 is required to cover the pattern of the printing layer 3, thereby giving rise to the four-layer structure.

The base layer 1 is made of a thermoplastic resin or plastic material, preferably selected from polyethylene terephthalate (PET), polycarbonate (PC) and polyvinyl chloride (PVC). The separation layer comprises silicone oil or wax.

Overall, the transfer printing sheet S incorporating a plastic sheet as the base layer 1, which can easily be moulded in a semi-heated or softened state and whose temperature range from softening point Tg to viscous flow Tm exceeds 30°C. The elongation rate of the chosen plastic material is lager than 200%. The three or four layers 1 to 5 are bonded together with adequate strength such that they will not delaminate during moulding operation under the application of heat and pressure.

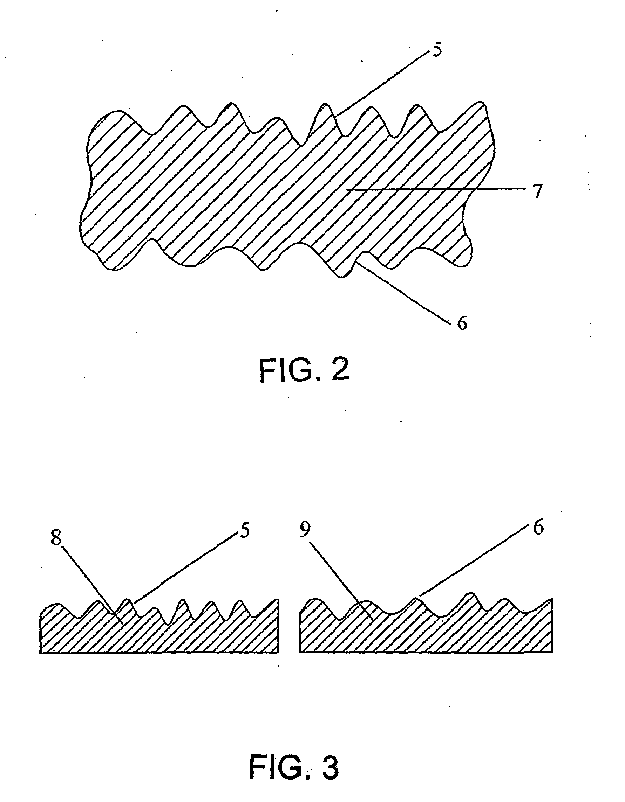

The surface 5/6 of the object 7 to be printed has a non-planar or, more accurately, an irregular (or organic or arbitrary) shape such as that of a human figurine, or it may be the spherical surface of a ball. In order to print the pattern on the irregular surface 5/6, the surface 5/6 is divided into an upper surface 5 and a lower surface 6 for printing on opposite sides, as shown in Figure 2.

It should be understood that the object 7 of Figure 2 is merely a dummy at this stage, whose shape (and also size of course) is identical with that of the printed object 7 i.e. the final product.

For shaping the transfer printing sheet S to the same shape as the non-planar surface 5/6 of the object 7, a pair of moulds 8 and 9 (Figure 3) is produced, which have the same shapes corresponding to that of the upper and lower surfaces 5 and 6 of the object 7. The moulds 8 and 9 are replicas or models of the two surfaces 5 and 6, with their bodies designed to suit use in a vacuum moulding machine M for moulding the transfer printing sheet S to assume the same shape, albeit reversed, as the object 7.

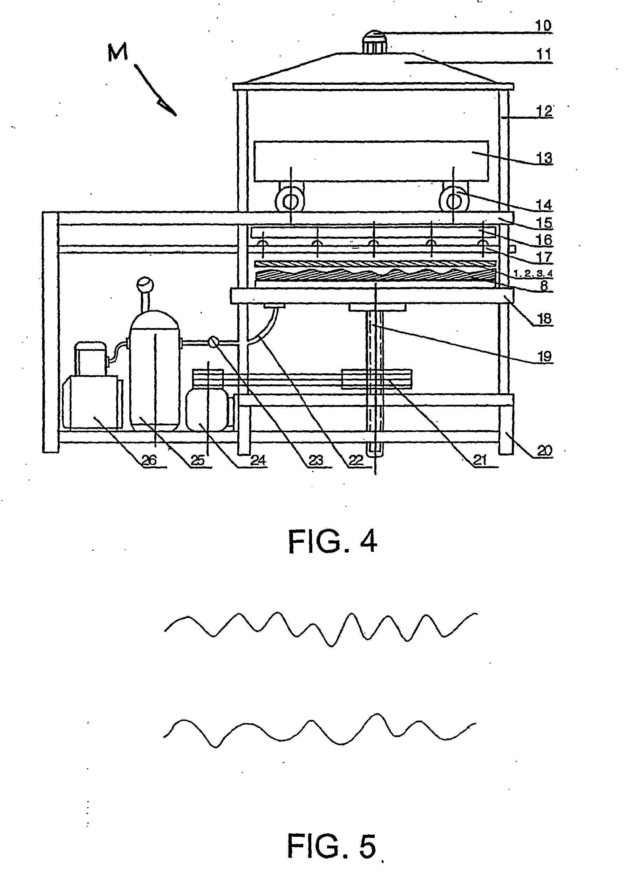

The vacuum moulding machine M is generally known in the art. In a typical construction shown in Figure 4, the machine M has upper and lower support frames 12 and 20, a vacuum generating system formed by components 22, 23, 25 and 26, and a transport system driven by an electric motor 24. The vacuum generating and transport systems 22 to 26 are mounted on the lower support frame 20 at the bottom.

The vacuum moulding machine M includes a suction moulding plate 18 and a pressing device 19/21 which is formed by co-operating screw-threaded shaft 19 and screw-threaded driving wheel 21 below the suction moulding plate 18 for raising and lowering the plate 18. Also included are pressing components 15, 16 and 17 above the suction moulding plate 18, and a movable heating plate 13/14 at an upper position. The pressing device 19/21 is driven by the motor 24 via a drive transmission belt.

In operation, one of the moulds 8 and 9, for example the mould 8, is firstly fixed on the suction moulding plate 18, with its irregularly shaped surface 5 facing upwards. A multilayer transfer printing sheet S (i.e. 1-3 or 1-4) is then placed on the mould 8.

The movable heating plate 13/14 applies heat from above to the transfer printing sheet S. The vacuum moulding plate 18 is then raised by the pressing device 19/21 as driven by the motor 24, such that the pressing components 15/16/17 press upon the transfer printing sheet S. Simultaneously with the application of vacuum suction by the vacuum generating system 22/23/25/26 to the vacuum moulding plate 18, the transfer printing sheet S is vacuum moulded onto the mould 8 for shaping to the latter's irregular shape 5 corresponding to that of the upper surface 5 of the object 7.

During the next moulding operation, the other mould 9 is used to vacuum mould another transfer printing sheet S for shaping to assume the irregular shape 6 of the mould 9 corresponding to that of the lower surface 6 of the object 7.

A cooling blower system, comprising an electric blower 10 and a hood 11, at the top of the vacuum moulding machine M is switched on to cool the moulded transfer printing sheet S at the end of each moulding operation.

In general, each transfer printing sheets S is moulded to the target shape under vacuum (i.e. a negative pressure) in the vacuum moulding machine M while being softened by heat. Two suitably shaped transfer printing sheets S are obtained (Figure 5) for subsequent operation.

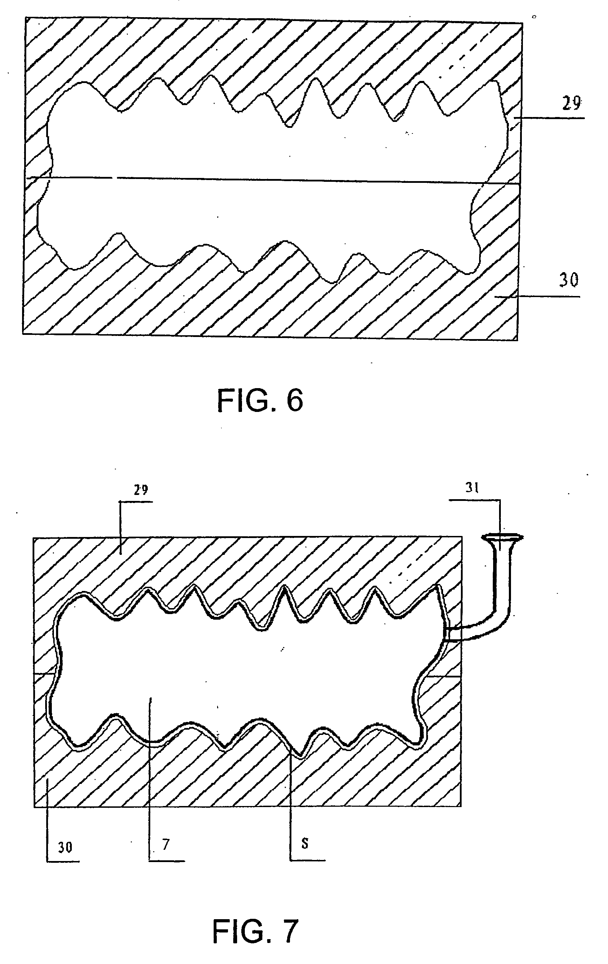

The making of the objects to be printed requires the use of certain appropriate moulding operations depending on their materials and/or constructions or designs. In this particular embodiment, the object 7 is produced by a suitable moulding operation such as injection moulding, blow moulding, slush moulding or foaming, using a pair of upper and lower moulds 29 and 30 (Figure 6).

Most objects generate or require a certain degree of heat when they are being moulded into shape, for example by way of injection moulding. Some objects exhibit adhesive properties as well as heat during moulding, such as PU (polyurethane) foam. The subject invention takes advantage of such properties skillfully.

The two pre-formed transfer printing sheets S are placed inside the mould 29/30 against the inner surfaces of the upper and lower moulds 29 and 30, covering the entire inner surfaces and with their printing layers 3 facing inwards, as shown in Figure 7.

The moulding material for producing the object 7 is a colloid in a viscous flow state or a liquid in two parts A and B. This material is to be introduced into the mould 29/30 via a filling port 31 on the upper mould 29, where the material can come into direct contact with the printing layers 3 of the transfer printing sheets S. Examples of the event to take place are:
1. Upon melting by heat, the plastics in a viscous flow state is poured into the mould 29/30, where it flows around the mould 29/30 and finally solidifies into shape upon cooling;
2. The liquid parts A and B are mixed together and then poured into the mould 29/30, where the liquid flows around the mould 29/30 and finally solidifies into shape upon cooling;
3. The liquid parts A and B are mixed together and then poured into the mould 29/30, where the liquid flows around the mould 29/30 and finally foams into shape;
4. The rubber material while in a viscous flow state is poured into the mould 29/30, where it flows around the mould 29/30 and finally solidifies into shape upon cooling; and
5. Any one-part moulding material is molten by heat and then, while in a viscous flow state, poured into the mould 29/30, where it flows around the mould 29/30 and finally solidifies into shape upon cooling.

Under the action of the heat, adhesion and/or reaction activity, as the object 7 is moulded and solidifies into shape in the mould 29/30, the printing layers 3 are transferred to and attached firmly onto the irregular surfaces 5 and 6 of the object 7 then formed, such that the printing layers 3 and the surfaces 5 and 6 are integrated.

In general, the physical changes and chemical changes taking place during the moulding operation in the mould 29/30 are used to bond, or to cause bonding of, the printing layers 3 with the irregular surfaces 5 and 6 of the object 7 upon formation.

The base layer 1 of each of the transfer printing sheets S is finally removed or stripped off to reveal the pattern printed on the surface of the finally produced object 7, and it can later be re-used through recycling as it is made of a thermoplastic material. The printed layer or pattern 3 will not easily peel off or delaminate by reason, at least in part, that it has been moulded onto the object 7.

It is clear that the subject matter to be printed may comprise patterns, graphic designs or texts or any combination thereof, and is herein collectively referred to as pattern.

The transfer printing method of the subject invention makes it possible to obtain the finest pattern printed on an irregular surface of an object or item, in which the printed layer (e.g. pattern, graphic design or text) is firmly and integrally attached to the irregular surface by utilizing the heat and reaction activity generated or occurring during moulding of the object to be printed. This results in a reduction in production cost, and the process is pollution free. In particular, the printed layer is resistant against peeling off or delamination.

With a printed object produced using the subject transfer printing method, the printed layer on the surface is integrated with the body of the object with good adhesion force. Also, there are no special requirements for the (irregular) surface of the object to be printed, and the pattern, etc. can be printed detailedly and pre-arranged at the right position on the surface.

The articles or items to be printed may be moulded from any suitable material, such as rigid thermoset plastics, semi-rigid thermoplastic elastomer, soft foaming material and soft elastic material such as rubber. The subject transfer printing method is especially suitable for use in printing on soft or elastic materials because such materials lack the rigidity required to withstand the force of direct printing.

For objects that have already been moulded into shape or otherwise produced, the aforesaid pre-shaped multilayer transfer printing sheet S may still be used, whose shape corresponds to that of the object to be printed. By placing the transfer printing sheet S against the object, the printing layer 1 may be bonded with the object's surface by way of a hot pressing operation, whereby fine printing on irregular surface of existing objects can also be achieved.

The invention has been given by way of example only, and various modifications of and/or alterations to the described embodiment may be made by persons skilled in the art without departing from the scope of the invention as specified in the appended claims.

## Claims

1. A transfer printing method for printing a pattern on a non-planar surface of an object, comprising the steps of:
(a) providing a transfer printing sheet comprising a base layer and a printing layer incorporating the pattern;
(b) shaping the transfer printing sheet to substantially the same shape as the non-planar surface of the object;
(c) placing the shaped transfer printing sheet inside a mould for producing the object through a moulding operation, with the printing layer facing inwards;
(d) introducing a moulding material into the mould to produce the object and to transfer the printing layer to the non-planar surface of the object and integrate the printing layer with the non-planar surface as the object is moulded into shape; and
(e) removing the base layer to reveal the pattern printed on the surface of the object.

2. The transfer printing method as claimed in claim 1, **characterized in that** in step (d) the printing layer is transferred to and integrated with the non-planar surface of the object under the action of at least one of heat and reaction activity during the moulding operation.

3. The transfer printing method as claimed in claim 1, **characterized in that** step (d) includes using physical changes and chemical changes taking place during the moulding operation to bond the printing layer with the non-planar surface of the object.

4. The transfer printing method as claimed in claim 1, **characterized in that** step (b) comprises shaping the transfer printing sheet to substantially the same shape as the non-planar surface of the object through a vacuum moulding operation.

5. The transfer printing method as claimed in claim 4, **characterized in that** step (b) includes producing a mould having substantially the same shape as the non-planar surface of the object for use in the vacuum moulding operation for shaping the transfer printing sheet to that shape.

6. The transfer printing method as claimed in any one of claims 1 to 5, **characterized in that** step (c) includes placing the shaped transfer printing sheet to cover substantially the entire inner surface of the mould.

7. The transfer printing method as claimed in any one of claims 1 to 5, **characterized in that** the base layer is made of a plastic material.

8. The transfer printing method as claimed in any one of claims 1 to 5, **characterized in that** the base layer is made of a material selected from polyethylene terephthalate (PET), polycarbonate (PC) and polyvinyl chloride (PVC).

9. The transfer printing method as claimed in any one of claims 1 to 5, **characterized in that** the transfer printing sheet includes a separation layer between the base layer and the printing layer.

10. The transfer printing method as claimed in claim 9, **characterized in that** the separation layer comprises one of silicone oil and wax.

11. The transfer printing method as claimed in any one of claims 1 to 5, **characterized in that** the transfer printing sheet has an elongation rate exceeding 200%.

12. The transfer printing method as claimed in any one of claims 1 to 5, **characterized in that** the moulding material of step (d) is selected from rigid thermoset plastics, semi-rigid thermoplastic elastomer, soft foaming material and soft elastic material.

13. An object printed with a pattern using the transfer printing method as claimed in any one of claims 1 to 5, comprising a body which has a non-planar surface on which the pattern is so printed.
